(19) Europäisches Patentamt
European Patent Office
Office européen des brevets

(11) Veröffentlichungsnummer: **0 531 866 A1**

(12) # EUROPÄISCHE PATENTANMELDUNG

(21) Anmeldenummer: **92114913.4**

(22) Anmeldetag: **01.09.92**

(51) Int. Cl.[5]: **C07G 17/00**, C08H 5/00, A61K 35/10

(30) Priorität: **09.09.91 DE 4129872**

(43) Veröffentlichungstag der Anmeldung: **17.03.93 Patentblatt 93/11**

(84) Benannte Vertragsstaaten: **AT BE CH ES FR IT LI NL**

(71) Anmelder: **SÄCHSISCHES PHARMAWERK WEINBÖHLA GmbH**
**Poststrasse 58**
**O-8256 Weinböhla(DE)**

(72) Erfinder: **Kühnert, Manfred, Prof. Dr.**
**Holzhäuser Strasse 23**
**O-7027 Leipzig(DE)**
Erfinder: **Fuchs, Volkhard, Dr.**
**Salomonstrasse 25b**
**O-7010 Leipzig(DE)**
Erfinder: **Golbs, Siegfried, Dr.**
**Brambacher Strasse 55**
**O-7060 Leipzig(DE)**
Erfinder: **Knauf, Hartmut, Dipl.-Chem.**
**Goethestrasse 9**
**O-8256 Weinböhla(DE)**

(74) Vertreter: **Dost, Wolfgang, Dr.rer.nat.,Dipl.-Chem. et al**
**Patent- & Rechtsanwälte Bardehle . Pagenberg . Dost . Altenburg . Frohwitter . Geissler & Partner Galileiplatz 1 Postfach 86 06 20**
**W-8000 München 86 (DE)**

(54) **Verfahren zur Herstellung von Huminsäure-Metall-Verbindungen, deren Verwendung als Adsorptions- und/oder Entgiftungsmittel bzw. als Spurenelementquelle.**

(57) Verfahren zur Herstellung von Huminsäure-Metall-Verbindungen nativen Ursprungs, wobei man

a) ein Alkali-Humat-Huminsäuregemisch, erhalten aus natürlicher Braunkohle, einer alkalischen Extraktion unterzieht,

b) den alkalischen Rohextrakt auf einen pH-Wert von 3,0 bis 6,9 einstellt,

c) eine nukleophile Substanz und eine Metallsalz-Lösung unter Rühren zusetzt, und

d) den erhaltenen Niederschlag abtrennt, wäscht und bei Temperaturen unter 70 ° C bis auf einen Wassergehalt von < 10 % trocknet.

Die erhaltenen Huminsäure-Metall-Verbindungen dienen als Adsorptions- und/oder Entgiftungsmittel, oder als Spurenelementquelle.

EP 0 531 866 A1

Die Erfindung betrifft ein Verfahren zur Herstellung von Huminsäure-Metall-Verbindungen aus Huminsäuren nativen Ursprungs und deren Verwendung.

Bekannt sind bisher Anwendungen von Huminsäuren und Humaten in der Humanmedizin (z.B. äußerliche Anwendung bei Rheumaerkrankungen), in der Veterinärmedizin (z.B. Therapie von Magen-Darm-Erkrankungen), in der Landwirtschaft (z.B. Adjuvant für Granulationsdünger), in der Erdöl-Industrie (z.B. Emulgatorbasis bei Erdölbohrern) und im Umweltschutz (z.B. Aufbereitung von Industrie- und Siedlungsmüll).

Bekannt ist auch die Gewinnung von Huminsäuren aus natürlichen Quellen sowie die chemische Synthese. Die Herstellung synthetischer Huminsäuren ist aufwendiger und teurer als die Gewinnung von Huminsäuren nativen Ursprungs. Außerdem weisen synthetische Huminsäuren niedere Molmassen auf (< 10.000), während Huminsäuren nativen Ursprungs Molmassen von 10.000 bis über 100.000 besitzen, die die Grundlage für ihr vielschichtiges Wirkungsprofil bilden.

Bekannt ist weiter die Bildung von Metall-Humaten durch Zugabe von Metallsalzlösungen zu wässrigen Huminsäurelösungen.

Die Erfindung betrifft nun ein Verfahren zur Herstellung von Huminsäure-Metall-Verbindungen aus Huminsäuren nativen Ursprungs, das dadurch gekennzeichnet ist, daß man

a) ein Alkali-Humat-Huminsäure-Gemisch, erhalten aus natürlicher Braunkohle, einer alkalischen Extraktion unterzieht,

b) den alkalischen Rohextrakt auf einen pH-Wert von 3,0 bis 6,9 einstellt,

c) eine nukleophile Substanz und eine Metallsalz-Lösung unter Rühren zusetzt, und

d) den erhaltenen Niederschlag abtrennt, wäscht und bei Temperaturen unter 70° C bis zu einem Wassergehalt < 10% trocknet.

Die Erfindung betrifft ferner die Verwendung der hergestellten Huminsäure-Metall-Verbindungen als Adsorptions- und/oder Entgiftungsmittel bzw. als Spurenelementquelle.

Das erfindungsgemäße Verfahren besitzt insbesondere den Vorteil, daß das Ausgangsgemisch, d. h. das Alkali-Humat-Huminsäure-Gemisch, aus natürlichen Braunkohlevorkommen gewonnen wird. Dies ist wirtschaftlich günstig, da energiearme, jüngere Braunkohle mit hohen Huminsäuregehalten und niedrigen Rohstoffkosten verwendet wird.

Bei den erfindungsgemäß hergestellten Huminsäure-Metall-Verbindungen handelt es sich um Komplexverbindungen zwischen drei Reaktionspartnern mit folgender Struktur:

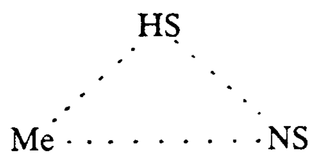

mit HS = native Huminsäure, Me = Metall, NS = nukleophile Substanz

Die erfindungsgemäßen Huminsäure-Metall-Verbindungen besitzen spezifische Anwendungen in der Medizin (z.B. in der Veterinärmedizin als Spurenelementquelle) sowie im Umweltschutz bei der Dekontamination von Radionukliden aus Wasser. So besitzt der erfindungsgemäß hergestellte Huminsäure-Eisen(II)-Carboxymethylcellulosekomplex eine sehr hohe Bioverfügbarkeit von Fe(II) und eignet sich deshalb in der Veterinärmedizin als Spurenelementquelle. Der erfindungsgemäß hergestellte Huminsäure-Silber-Polyethyleniminkomplex weist eine hervorragende Adsorptionskapazität gegenüber $^{131}J$ aus Wasser sowie eine gute resorptionsvermindernde Wirkung gegenüber $^{134}Cs$, $^{89}Sr$ und $^{125}J$ in vivo (Laboratoriumsratte) auf.

Als Ausgangsstoff des Verfahrens der Erfindung wird ein Alkali-Humat-Huminsäuregemisch verwendet. Die Herstellung eines solchen Gemisches wird in der DDR-Patentschrift 44 155 beschrieben. Ein übliches Handelsprodukt ist unter dem Namen "HUMOCARB®" bekannt.

Dieses Alkali-Humat-Huminsäure-Gemisch unterzieht man einer alkalischen Extraktion (Stufe a)). Der eingestellte alkalische pH-Wert ist nicht kritisch. Vorzugsweise erfolgt die alkalische Extraktion jedoch bis zur Einstellung eines pH-Wertes über 11, bevorzugt von 11 bis 13, weiter bevorzugt von 11 bis 12. Für die alkalische Extraktion kommen übliche Basen in Frage, wie Natronlauge, Kalilauge, Natriumhydrogencarbonat, Kaliumhydrogencarbonat oder Ammoniak. Vorzugsweise erfolgt die alkalische Extraktion mit wäßriger Natronlauge, insbesondere mit 0.5 n NaOH (Stufe a)), da damit bessere Extraktionsausbeuten erzielt werden.

Der erhaltene alkalische Rohextrakt wird dann auf einen sauren pH-Wert (Stufe b)) von 3,0 bis 6,9, vorzugsweise von 4.5 bis 6.5, eingestellt. Die Einstellung des pH-Wertes kann mit verdünnten Säuren oder

einem Ionenaustauscher erfolgen. Es ist jedoch bevorzugt verdünnte Säuren, wie Essigsäure oder Salzsäure, zu verwenden. Besonders bevorzugt ist die Verwendung von verdünnter Essigsäure, da damit größere spezifische Oberflächen der Huminsäure-Metall-Verbindungen erhalten werden.

Unter Rühren werden nun eine nukleophile Substanz und eine Metallsalz-Lösung zugesetzt (Stufe c)). Als nukleophile Substanz können z.B. Polyethylenimin, Carboxymethylcellulose, Carboxyethylcellulose sowie weitere Cellulose-Derivate, oder Carboxymethylstärke, Carboxyethylstärke sowie weitere Stärke-Derivate verwendet werden. Bevorzugt ist die Verwendung von Carboxymethylcellulose oder Polyethylenimin.

Die Metallsalz-Lösung kann sowohl wäßrig als auch nicht-wäßrig sein. Für die nichtwäßrigen Metallsalz-Lösungen eignen sich beispielsweise Alkohole, z.B. Ethanol oder Methanol, oder Ether, sowie deren Gemische. Als Kationen der Metallsalz-Lösung werden vorzugsweise $ZrO^{2+}$, $TiO^{2+}$, $Mo^{6+}$, $Ag^{+}$, $Ba^{2+}$, $Bi^{3+}$, $Cu^{2+}$, $Fe^{2+}$, $Fe^{3+}$, $VO^{2+}$, $Zn^{2+}$ oder deren Gemische verwendet.

Der erhaltene Niederschlag wird dann abgetrennt, gewaschen und getrocknet (Stufe d)). Für die Abtrennung kommen die bekannten Methoden in Frage, vorzugsweise Druckfiltration oder Zentrifugation. Nach der Abtrennung wird der Niederschlag gewaschen. Dieses Waschen kann mit Wasser oder mit niedrigen Alkoholen erfolgen. Vorzugsweise erfolgt das Waschen mit dest. Wassser. Der gewaschene Niederschlag wird dann bei Temperaturen unter 70° C bis auf einen Wassergehalt von < 10% getrocknet. Für diese milde Trocknung kommen die bekannten Methoden in Frage. Gefriertrocknung oder Vakuumtrocknung sind bevorzugt. Vorzugsweise erfolgt die Trocknung bis zu einem Wassergehalt von < 5%.

Die Abfolge der Stufen kann auch derart verändert sein, daß Stufe (c)) vor Stufe (b)) erfolgt.

Die Erfindung wird weiter durch die folgenden Beispiele beschrieben.

Beispiel 1

Herstellung von Huminsäure-Wismut-Polyethyleniminkomplex-Verbindung

300 g aus Braunkohle durch Umsetzung mit Soda erhaltenes Alkali-Humat-Huminsäure-Gemisch (HUMOCARB®, Hersteller: Sächsisches Pharmawerk Weinböhla GmbH), wird mit 3000 ml 0,5 n NaOH 5 Stunden gerührt. Das nach der Zentrifugation vorliegende Zentrifugat (= alkalischer Rohextrakt mit einem pH-Wert > 11) kann nach 2 Varianten auf einen pH-Wert von 4,5 - 6,5 (= saurer Rohextrakt) eingestellt werden.

I) 1,5 l alkatischer Rohextrakt werden mit 1,5 l $H_2O_{dest.}$ verdünnt, und anschließend werden portionsweise unter Rühren etwa 450 ml saurer Ionenaustauscher in der $H^+$-Form (z.B. Wofatit KPS) zugegeben, bis der gewünschte pH-Wert erreicht ist.

II) 1,5 l alkalischer Rohextrakt werden mit 1,5 l $H_2O_{dest.}$ verdünnt, und anschließend werden unter Rühren insgesamt etwa 450 ml 0,5 n Essigsäure portionsweise zugegeben.

Zu 4 l saurem Rohextrakt (pH = 5,5; Huminsäure (HS)-Gehalt = 6%) werden 60 g Polyethylenimin unter Rühren hinzugefügt. Hierauf versetzt man portionsweise mit einer Lösung aus 90 g Zitronensäure und 20 g $Bi(NO_3)_3$ x $H_2O$ in 700 ml $H_2O_{dest.}$. Man rührt noch 1 Stunde, zentrifugiert, wäscht mit $H_2O_{dest.}$ und trocknet durch Gefriertrocknung. Die Ausbeute beträgt 312 g Produkt mit folgenden Analysendaten:

| | |
|---|---|
| $H_2O$-Gehalt | 3.8% |
| HS-Gehalt | 72.0% x) |
| Bi-Gehalt | 5.0% x) |

x) ber. auf Trockensubstanz

Die Differenz zu 100% ergibt sich aus gebundenem Polyethylenimin.

Beispiel 2

Herstellung von Huminsäure-Kupfer-Carboxymethylcellulosekomplex-Verbindung

Zu 2 l saurem Rohextrakt gemäß Beispiel 1 und 1 l $H_2O_{dest.}$ wird unter Rühren eine Lösung von 100 g Carboxymethylcellulose L 90 in 2,5 l $H_2O_{dest.}$ portionsweise hinzugefügt. Anschließend wird mit $H_2O_{dest.}$ auf 10 l verdünnt. Unter Rühren fügt man 98 g $CuSO_4$ x 5 $H_2O$ in 600 ml $H_2O_{dest.}$ portionsweise hinzu und rührt noch 1 Stunde. Anschließend wird zentrifugiert, mit $H_2O_{dest.}$ gewaschen und der Niederschlag gefriergetrocknet. Die Ausbeute beträgt 195 g Produkt mit folgenden analytischen Daten:

| | |
|---|---|
| $H_2O$-Gehalt | 3,9% |
| HS-Gehalt | 70.5% x) |
| Cu-Gehalt | 19,2% x) |

x) ber. auf Trockensubstanz

Die Differenz zu 100% ergibt sich aus gebundener Carboxymethylcellulose.

Beispiel 3

Herstellung von Huminsäure-Eisen(II)-Carboxymethylcellulosekomplex-Verbindung

Zu 1 l saurem Rohextrakt gemäß Beispiel 1 fügt man unter Rühren eine Lösung von 17 g Carboxvmethylcellulose L 90 in 500 ml $H_2O_{dest.}$ zu. Anschließend wird mit $H_2O_{dest.}$ auf 5 l verdünnt. Danach werden unter Rühren 5 g $FeSO_4$ x $7H_2O$ in 50 ml $H_2O_{dest.}$ langsam zugegeben und 1 Stunde gerührt. Der Niederschlag wird mittels Zentrifugation abgetrennt, mit $H_2O_{dest.}$ gewaschen und gefriergetrocknet. Die Ausbeute beträgt 66 g mit folgenden analytischen Daten:

| | |
|---|---|
| $H_2O$-Gehalt | 1.8% |
| HS-Gehalt | 79.5% x) |
| Fe(II)-Gehalt | 1.51% x) |

x) ber. auf Trockensubstanz

Die Differenz zu 100% ergibt sich aus gebundener Carboxymethylcellulose.

Beispiel 4

Anwendung von Huminsäure-Metall-Verbindungen zur Dekontamination von Radionukliden

Die Werte für die Adsorption von $^{89}Sr^{2+}$, $^{134}Cs^{+}$ und $^{131}J^{-}$ aus wäßrigen Lösungen durch Huminsäure-Metall-Verbindungen im Kontaktadsorptionsverfahren (Einwaage: 0,1g Huminsäure-Metall-Verbindung; Korngröße: 0,04 mm) sind in der nachfolgenden Tabelle 1 aufgeführt.

TABELLE 1:

| HS-M-V | $I_E^x$ | $I_R^{xx}$ | Adsorption (%) |
|---|---|---|---|
| | $^{131}J^-$ | | |
| Huminsäure-Ag-PEI-Verbind. (mit 19 % Ag) | 31.000 | 1.800 | 94 |
| Huminsäure-Bi-PEI-Verbind. (mit 5 % Bi) | 33.900 | 2.620 | 92 |

| | | | |
|---|---|---|---|
| Huminsäure-Cu-CMC-Verbind. (mit 19,2 % Cu) | 33.500 | 2.080 | 94 |
| | $^{134}Cs^{+}$ | | |
| Huminsäure-Ag-PEI-Verbind. (mit 19 % Ag) | 33.700 | 5.170 | 85 |
| Huminsäure-Bi-PEI-Verbind. (mit 5 % Bi) | 29.800 | 5.110 | 83 |
| Huminsäure-Cu-CMC-Verbind. (mit 19,2 % Cu) | 31.000 | 3.200 | 90 |
| | $^{89}Sr^{2+}$ | | |
| Huminsäure-Ag-PEI-Verbind. (mit 19 % Ag) | 30.600 | 15.700 | 49 |
| Huminsäure-Bi-PEI-Verbind. (mit 5 % Bi) | 31000 | 14.700 | 53 |
| Huminsäure-Cu-CMC-Verbind. (mit 19,2 % Cu) | 30.900 | 12.500 | 60 |

$I_E^x$ = Eingangs-Impulsrate der Kontaminationslösung

$I_R^{xx}$ = Rest-Impulsrate der Kontaminationslösung

PEI = Polyethylenimin

CMC = Carboxymethylcellulose

HS-M-V = Huminsäure-Metall-Verbindung

Diese Tabelle zeigt, daß die Huminsäure-Metall-Verbindungen sich gut für die Dekontamination von Radionukliden eignen. Aus den rechts in der Tabelle angegebenen Adsorptionsraten sieht man, daß die Adsorption zwischen 49 und 94 % liegt.

Beispiel 5

Dieses Beispiel zeigt die höhere Bioverfügbarkeit von Fe(II) aus einer Huminsäure-Fe(II)-Carboxymethylcellulosekomplex-Verbindung im Vergleich zu bekannten Eisenpräparaten

In klinisch-pharmakologischen Untersuchungen an Ferkeln wurde die Bioverfügbarkeit von Fe(II) aus einem erfindungsgemäß hergestellten Huminsäure-Fe(II)-Carboxymethylcellulosekomplex (SULUMIN®, Gehalt an Fe(II) 1,5%) im Vergleich zu bekannten, oral verabreichten Eisenverbindungen untersucht. Als Vergleichspräparate dienten:

- $Fe^{II}(NH_4)_2(SO_4)_2$
- Ursoferruvit (Pastenstrang mit Ferrum reductum, $Fe^0$)
- Ursoferran (Eisendextran mit Fe(III))

Als Beurteilungskriterien für die Bioverfügbarkeit wurden der Hämoglobingehalt und die Erythrozytenzahl herangezogen (siehe nachfolgende Tabelle 2).

Die gute Bioverfügbarkeit von Fe(II) aus SULUMIN® für das Ferkel besteht darin, daß bereits 30 mg Fe-(II) ausreichen, um den Eisenstoffwechsel der Tiere stabil zu halten. Dies wird deutlich, da zwischen Ferkeln, denen Eisen über Ursoferruvit (640 mg Ferrum reductum), Ursoferran (300 mg Fe(III)) bzw. SULUMIN® (15-30 mg Fe(II)) oral verabreicht wurde, keine signifikanten Unterschiede hinsichtlich Hb-Gehalt und Erythrozytenzahl auftraten.

Bei der Behandlung von Ferkeln mit den bisher üblichen Eisenverbindungen (besonders bei parentaler Gabe) besteht die Gefahr von Eisenintoxikationen infolge der hoben Eisenzufuhr. So können Eisenpräparate beim Ferkel bei Dosierungen > 100 mg der Eisenkomplexe (Ferridextrine, Ferridextrane) die Ursache toxischer Wirkungen darstellen. Der Vorteil der nach dem erfindungsgemäßen Verfahren hergestellten Verbindung besteht in der guten Bioverfügbarkeit von Fe(II) und der damit verbundenen geringeren Eisenkonzentration für das Ferkel im Vergleich zu den bekannten Eisenpräparaten.

Huminsäure-Fe(II)-Carboxymethylcellulosekomplex-Verbindungen können mit dem erfindungsgemäßen Verfahren mit unterschiedlichem Gehalt an Fe(II) erhalten werden (Gehalte von 0,1 bis 12%).

Tab. 2: Vergleich der Bioverfügbarkeit von $Fe^{2+}$ aus Huminsäure-Eisen$^{II}$-Carboxymethylcellulosekomplex (Sulumin F®; Gehalt: 1,5 % $Fe^{II}$) mit üblichen oral verabreichten Eisenpräparaten beim Ferkel

| Versuchs-Nr. | Alter d. Tiere/Anzahl d. Tiere | Fe-Verbindung | Fe-Dosis | Unters.-zeitpunkt | Hb-Gehalt (mmol/l) $\bar{x} \pm s$ | Erythrozytenzahl (Mio/µl) $\bar{x} \pm s$ |
|---|---|---|---|---|---|---|
| 1 | 8 d/5 | Sulumin F® | 1x15mg $Fe^{2+}$/kg KM | 24 h p. appl. | 7,0 ± 0,7 | 5,2 ± 0,4 |
| | 8 d/5 | $Fe(NH_4)_2(SO_4)_2$ | 1x15mg $Fe^{2+}$/kg KM | " | 6,4 ± 0,2 | 4,6 + 0,7 |
| 2 | 8 d/12 | Sulumin F® | 1x15mg $Fe^{2+}$/kg KM | 48 h p. appl. | 4,7 ± 0,5 | 4,9 ± 1,0 |
| | 8 d/12 | Ursoferruvit (Fe-Vitamin-Pastenstrang) | 1x640mg reduziertes Fe/Tier | " | 5,8 ± 0,5 | 5,8 ± 0,4 |
| 3 | 1 d/50 | Sulumin F® | tägl. 3mg $Fe^{2+}$/48h p. appl. über 10 Tage (insgesamt 30mg/Tier) | 48h p. appl. | 4,7 ± 0,8 | 4,1 ± 1,0 |
| | 1 d/50 | Ursoferran (Fe-Dextran) | 150mg $Fe^{III}$ am 1. + 10. Tag (insgesamt 300mg/Tier) | " | 4,8 ± 1,0 | 4,3 ± 1,0 |
| 4 | 2 d/12 | Sulumin F® | 1x15mg $Fe^{2+}$/kg KM | 24 h p. appl. | 6,4 ± 0,4 | 6,3 ± 0,7 |
| | | | | 48 h " | 5,6 ± 0,3 | 6,0 ± 1,0 |
| | | | | 72 h " | 7,0 ± 0,3 | 6,0 ± 0,3 |
| | 2 d/12 | Ursoferruvit | 1x640mg reduziertes Eisen/Tier | 24 h " | 5,8 ± 0,2 | 6,0 ± 0,4 |
| | | | | 48 h " | 5,6 ± 0,1 | 5,1 ± 1,0 |
| | | | | 72 h " | 6,9 ± 0,7 | 6,0 ± 0,5 |

KM = Körpermasse

## Patentansprüche

1. Verfahren zur Herstellung von Huminsäure-Metall-Verbindungen aus Huminsäuren nativen Ursprungs, **dadurch gekennzeichnet,** daß man
   a) ein Alkali-Humat-Huminsäure-Gemisch, erhalten aus natürlicher Braunkohle, einer alkalischen Extraktion unterzieht,
   b) den alkalischen Rohextrakt auf einen pH-Wert von 3,0 bis 6,9 einstellt,
   c) eine nukleophile Substanz und eine Metallsalz-Lösung unter Rühren zusetzt, und

d) den erhaltenen Niederschlag abtrennt, wäscht und bei Temperaturen unter 70° C bis auf einen Wassergehalt < 10% trocknet.

2. Verfahren nach Anspruch 1 dadurch gekennzeichnet, daß die alkalische Extraktion in Stufe a) mit wäßriger Natronlauge durchgeführt wird.

3. Verfahren nach Anspruch 1 oder 2, dadurch gekennzeichnet, daß in Stufe a) ein pH-Wert über 11 eingestellt wird.

4. Verfahren nach einem der Ansprüche 1 bis 3, dadurch gekennzeichnet, daß die Einstellung des sauren pH-Wertes in Stufe b) mit verdünnten Säuren durchgeführt wird.

5. Verfahren nach einem der Ansprüche 1 bis 4, dadurch gekennzeichnet, daß als nukleophile Substanz in Stufe c) Polyethylenimin oder Carboxymethylcellulose eingesetzt wird.

6. Verfahren nach einem der Ansprüche 1 bis 5, dadurch gekennzeichnet, daß man in Schritt c) Metallsalz-Lösungen mit den Kationen $ZrO^{2+}$, $TiO^{2+}$, $Mo^{6+}$, $Ag^{+}$, $Ba^{2+}$, $Bi^{3+}$, $Cu^{2+}$, $Fe^{2+}$, $Fe^{3+}$, $VO^{2+}$, $Zn^{2+}$ oder deren Gemischen einsetzt.

7. Verfahren nach einem der Ansprüche 1 bis 6, dadurch gekennzeichnet, daß man die Abtrennung des Niederschlags in Stufe d) durch Zentrifugieren vornimmt.

8. Verfahren nach einem der Ansprüche 1 bis 7, dadurch gekennzeichnet, daß man in Stufe d) zum Waschen des Niederschlags dest. Wasser verwendet.

9. Verfahren nach einem der Ansprüche 1 bis 8, dadurch gekennzeichnet, daß man die Trocknung des Niederschlages in Stufe d) mittels Gefriertrocknung oder Vakuumtrocknung durchführt.

10. Verfahren nach einem der Ansprüche 1 bis 9, dadurch gekennzeichnet, daß man in Stufe d) bis zu einem Wassergehalt < 5% trocknet.

11. Verwendung der nach einem der Ansprüche 1 bis 10 hergestellten Huminsäure-Metall-Verbindungen als Adsorptions- und/oder Entgiftungsmittel.

12. Verwendung nach Anspruch 11 zur Dekontamination von Radionukliden.

13. Verwendung der nach einem der Ansprüche 1 bis 10 hergestellten Huminsäure-Metall-Verbindungen als Spurenelementquelle.

Europäisches Patentamt

# EUROPÄISCHER RECHERCHENBERICHT

Nummer der Anmeldung

EP 92 11 4913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-839 876 (I.G. FARBENINDUSTRIE AKTIENGESELLSCHAFT)<br>* das ganze Dokument * | 1 | C07G17/00<br>C08H5/00<br>A61K35/10 |
| A | EP-A-0 313 718 (RUTGERSWERKE AKTIENGESELLSCHAFT)<br>* Seite 1, Zeile 1 - Seite 4, Zeile 57 * | 1 | |
| A | EP-A-0 272 737 (ENIRICERCHE S.P.A.)<br>* Seite 1, Zeile 1 - Seite 4, Zeile 4 * | 1 | |
| A | EP-A-0 298 710 (COUNCIL FOR SCIENTIFIC AND INDUSTRIAL RESEARCH)<br>* Seite 1, Zeile 1 - Seite 2, Zeile 45 * | 1 | |
| A | GB-A-2 225 010 (NATIONAL ENERGY COUNCIL)<br>* das ganze Dokument * | 1 | |
| A | DERWENT JAPANESE PATENTS REPORT<br>Section Ch, Week R17, 3. Juni 1970<br>Derwent Publications Ltd., London, GB;<br>Class C04, AN 70-28832R/17<br>& JP-B-45 010 723 (HOKUTAN K.K.) 17. April 1970<br>* Zusammenfassung * | 1 | RECHERCHIERTE SACHGEBIETE (Int. Cl.5 )<br>C07G<br>C08H<br>B01J<br>A61K |

Der vorliegende Recherchenbericht wurde für alle Patentansprüche erstellt

| Recherchenort | Abschlußdatum der Recherche | Prüfer |
|---|---|---|
| DEN HAAG | 30 NOVEMBER 1992 | SCOTT J.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument